# NEW EUROPEAN PATENT SPECIFICATION

(11) **EP 2 552 995 B2**
(45) Date of publication and mention of the opposition decision: **05.01.2022**
(45) Mention of the grant of the patent: 02.12.2015
(21) Application number: 11710223.6
(22) Date of filing: 28.03.2011
(51) Int. Cl.: C08G 64/06, C08G 64/30

(54) **MELT POLYCARBONATE HAVING IMPROVED HEAT AGEING**
SCHMELZPOLYCARBONAT MIT VERBESSERTER WÄRMEALTERUNG
POLYCARBONATE FONDU AYANT UN VIEILLISSEMENT THERMIQUE AMÉLIORÉ

(30) Priority: 01.04.2010 WO PCT/CN2010/000422
(43) Date of publication of application: 06.02.2013
(73) Proprietor: Covestro Deutschland AG, 51373 Leverkusen (DE)
(72) Inventor: KONRAD, Stephan, 41541 Dormagen (DE); HÄHNSEN, Heinrich, 47228 Duisburg (DE); KÖHLER, Karl-Heinz, 52078 Aachen (DE); HAGEN, Torsten, 45257 Essen (DE); BUTS, Marc, B-2570 Duffel (BE); KOCH, Daniel, Shanghai 200021 (CN); GULDENTOPS, Frank, Shanghai 200127 (CN)
(74) Representative: Levpat
(86) International application number: PCT/EP2011/054732
(87) International publication number: WO 2011/120921

(56) References cited:
- GB-A- 1 097 058
- US-A1- 2003 027 973
- US-A1- 2004 068 087
- US-B1- 6 291 630

## Description

The invention relates to a continuous melt transesterification process for the preparation of polycar-bonate having reduced subsequent yellowing of the mouldings produced therefrom on heat ageing with otherwise equally good optical properties of the polycarbonate during processing, the polycarbonate being prepared from bisphenols and diphenyl carbonate by the transesterification process in the melt, referred to below as "melt polycarbonate".

Polycarbonate is distinguished not only by its good mechanical properties but, inter alia, also by high transparency and colour brilliance. One possibility for assessing the colour brilliance is the so-called Yellowness Index (YI), which characterizes the degree of yellowing of the material. For high-quality polycarbonate, an important quality feature is a low YI value. Applications of polycarbonate based on bisphenol A (BPA) extend over a wide temperature range from -100°C to about + 135°C. Particularly in the case of heat ageing, i.e. on storage of mouldings at elevated temperatures of use of > 100°C over long periods of weeks or months in air, polycarbonate exhibits so-called subsequent yellowing with increasing temperature, i.e. an increase in the YI value with time. Below, subsequent yellowing (ΔYI) is designated as the difference in the degree of yellowing of a moulding after heat ageing at 135°C in air, measured as the YI value on the standard body according to ASTM D-1925, compared with the degree of yellowing (as YI value) of a freshly injection-moulded moulding. A low YI value is of considerable importance both in the preparation and in subsequent use. For colour-critical applications of polycarbonate, it is therefore desirable not only to produce polycarbonate mouldings having low YI starting values but rather to achieve as little subsequent yellowing as possible during the subsequent use under conditions of heat ageing. Subsequent yellowing occurs, for example, in the case of polycarbonate headlamp diffusion screens which, depending on size and shape, are exposed to continuous thermal loads of above 100°C. For such applications, a material is required whose optical properties are substantially unchanged at a high level and which properties decline as little as possible over the operating time.

Polycarbonate can be prepared by various processes. Firstly, the polycarbonate prepared by the interfacial polymerization process (IPC) has acquired industrial importance. The second process used is the melt polycarbonate (MPC) process. Polycarbonate which is prepared by the so-called melt transesterification process, also referred to as melt process, from organic carbonates, such as, for example, diaryl carbonates, and bisphenols without use of additional solvents in the melt is becoming increasingly economically important and is therefore a suitable material for many fields of use.

The preparation of aromatic polycarbonates by the melt transesterification process is known and is described, for example, in "Schnell", Chemistry and Physics of Polycarbonats, Polymer Reviews, Vol. 9, Interscience Publishers, New York, London, Sydney 1964, in D.C. Prevorsek, B.T. Debona and Y. Kersten, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), in D. Freitag, U. Grigo, P.R. Müller, N. Nouvertne, BAYER AG, "Polycarbonates" in Encyclopedia of Polymere Science and Engineering, Vol. 11, Second Edition, 1988, pages 648-718 and finally in Dr. U. Grigo, K. Kircher and P.R. Müller "Polycarbonate" in Becker/Braun, Kunststoff-Handbuch [Plastics Handbook], Volume 3/1, Polycarbonate, Polyacetale, Polyester, Celluloseester [Polycarbonates, polyacetals, polyesters, cellulose esters], Carl Hanser Verlag, Munich, Vienna 1992, pages 117-299 .

Compared with the PC prepared by the IPC process, the polycarbonate (PC) prepared by the MPC process known from the prior art has, inter alia, the disadvantage of greater subsequent yellowing. This is clear, for example, from JP 08183847 A. Here, the change of the Yellowness Index (YI) after the mouldings produced from melt polycarbonate have been stored at 160°C and for a period of 30 days (720 hours) is more than 14 YI units. However, this laid-open application provides no information as to which features influence the yellowing on heat ageing. EP 622 418 A2 likewise discloses pronounced subsequent yellowing of melt polycarbonates after heat ageing, but this laid-open application, too, provides the person skilled in the art with no information as to how he can influence the heat ageing.

A further disadvantage of the MPC process compared with the IPC process is the higher content of OH terminal groups which the polycarbonates prepared by the MPC process have. There has been no lack of attempts to reduce the OH terminal group content in melt polycarbonates. WO 03/048230 A1 describes the reduction of phenolic OH terminal groups in the MPC preparation by the addition of so-called endcap reagents. With the aid of such reagents, the content of free phenolic OH terminal groups can be reduced after or during the polymerization reaction by the MPC process. Endcap reagents are, for example, BMSC (bismethylsalicyl carbonate), which represents an activated diphenyl carbonate (DPC), or other activated diaryl carbonates.

The use of endcap reagents has a plurality of disadvantages for the MPC process, such as additional effort in the preparation of the MPC; additional costs for the preparation of the endcap reagents; poorer initial colours, poorer stability to hydrolysis and poorer thermal stability of the polycarbonate prepared by means of endcap reagents (see for example US 7482423 B2). In addition, the use of endcap reagents suppresses the increase in molecular weight, which is not desired for many applications.

EP 1 141 082 B1 discloses the preparation of a melt polycarbonate having an improved natural colour by use of specific catalysts, products having fewer branches and having fewer OH terminal groups forming. However, this document provides the person skilled in the art with no information on the subsequent yellowing by heat ageing and concerning how he can change the properties with regard to heat ageing.

A further possibility for minimizing the subsequent yellowing is the use of heat stabilizers. Such heat stabilizers suppress the oxidation of phenolic OH terminal groups (see for example H. Zweifel, Plastic additives handbook 5th edition). Thus, for example, JP 10-025339 A describes a melt polycarbonate which has only very little subsequent yellowing, designated as ΔYI, after heat ageing at 140°C in 240 hours, in spite of relatively high OH terminal group contents of 180 mg/kg; however, additives which act as ageing stabilizers (for example Irganox 1076) are used in the preparation thereof. The use of heat stabilizers means an additional expense in the MPC preparation and in the end results in only a retardation of the heat ageing, the stabilizers having been consumed as sacrificial substances.

Excessively low contents of phenolic OH groups are, however, an obstacle to the increase in molecular weight, as described in EP 1 004 609 B 1. In other words, if the OH terminal group contents are too low, the desired molecular weight can no longer be acheieved.

It is furthermore known that the polycarbonates prepared by the MPC process have so-called inherent branching species. These inherent branching species (also referred to as Fries branching species) form as a result of Fries rearrangements and subsequent reactions during the preparation process. The inherent branching structures in the MPC have the disadvantage that they bestow a poorer colour (yellow) on the MPC. The inherent branching species in the MPC are therefore undesired or it is desired to keep the content of the Fries branching species in the MPC as low as possible.

In order to obtain contents of Fries branching species in the MPC which are as low as possible, residence times which altogether are as short as possible are required in the preparation of the MPC. Short residence times on the other hand result in a poor increase in molecular weight. It has therefore not been possible to a sufficient extent to date simultaneously to optimize the desired parameters of the MPC end product, such as sufficiently high molecular weight, low OH terminal group contents, little subsequent yellowing and low contents of Fries branching species.

US 2003/027973 A1 and US 2004/068087 A1 discloses the preparation of melt polycarbonates having a low amount of Fries branching species.

Batch processes for the preparation of a melt polycarbonate having low phenolic OH values are known from US 6,291,630 B1 and GB 1 097 058 A.

The prior art does not disclose any polycarbonate which is prepared by the melt transesterification process from diphenols and diphenyl carbonate, having a molecular weight which is sufficiently high for many applications, and has little subsequent yellowing.

An object of the invention was therefore the provision of an aromatic polycarbonate which was prepared by the melt polycondensation process, having a sufficient molecular weight Mw of ≥ 18 000 g/mol, from diphenols and diphenyl carbonate without use of further substances for endcapping, which is distinguished by little subsequent yellowing of less than 5 units of the Yellowness-Index YI, preferably less than 3 YI units, after thermal storage of mouldings at temperatures of 135°C in 1000 hours.

Surprisingly, it has now been found that such a polycarbonate is obtainable by reacting diphenols with diphenyl carbonate in the presence of one or more of phosphonium or ammonium catalysts, under defined reaction conditions which correspond to certain combinations of the reaction parameters of temperature, pressure and reaction time, in particular in the polycondensation phase. Under these reaction conditions defined according to the invention, aromatic polycarbonates form which not only have a low OH terminal group content of ≤ 100 mg/kg, but preferably at least 1 mg/kg, but also only low contents of Fries branching species of ≤ 1000 mg/kg.

The invention therefore relates to a continuous melt transesterification process for the preparation of polycarbonates having a weight average molecular weight Mw of ≥ 18 000 g/mol, an OH terminal group content of less than or equal to 100 mg/kg, and containing structural units of the formula (I) 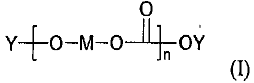
in which the square bracket designates repeating structural units,
M is Ar or a polyfunctional compound A, B, C and compound D,
it being possible for Ar to be a compound which is represented by formula (V) or (VI) 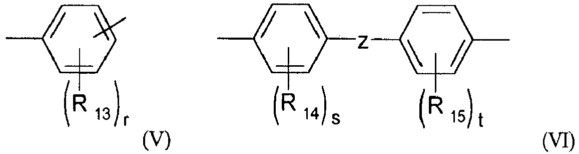
in which
Z is C₁- to C₈-alkylidene or C₅- to C₁₂-cycloalkylidene, S, SO₂ or a single bond,
R₁₃, R₁₄, R₁₅, independently of one another, are a substituted or unsubstituted C1 to C18 alkyl radical, preferably a substituted or unsubstituted phenyl, methyl, propyl, ethyl, butyl, C1 or Br,
n represents 0, 1 or 2,
r, s, t, independently of one another, may be 0, 1, 2 or 3,
the polyfunctional compound A being a compound of the formula 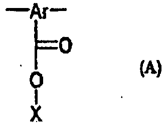 the polyfunctional compound B being a compound of the formula 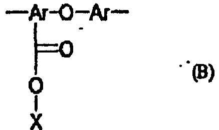 the polyfunctional compound C being a compound of the formula 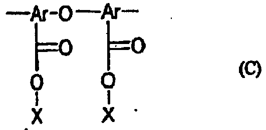 compound D being a compound of the formula 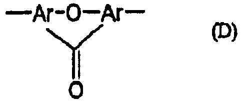 Y being H or a compound of the formula (X) 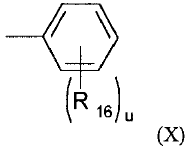 in which
   R₁₆ is identical or different H, C₁- to C₂₀-alkyl, C₆H₅ or C(CH₃)₂C₆H₅, and
   u may be 0, 1, 2 or 3,
   X being Y or -[MOCOO]ₙ-Y, M and Y having the abovementioned meaning;
   and the sum of polyfunctional compounds A, B, C and D being ≥ 5 mg/kg and ≤ 1000 mg/kg, characterized in that:
      a) aromatic diphenols and diphenyl carbonate are reacted in the presence of one or more catalysts, preferably phosphonium or ammonium compounds, in a first process step at temperatures between 160°C and 280°C and at pressures between 250 mbar and 30 mbar in an optionally multistage process with elimination of phenol to give oligomeric aromatic carbonates having molar masses Mw of less than 10 000 g/mol, and in that
      b) in a second process step, the oligomeric aromatic carbonates prepared in a) are reacted at temperatures between 260°C and 310°C and at pressures between 10 mbar and 0.5 mbar in an optionally multistage process with elimination of phenol during a residence time in this second process step of altogether at least 500 minutes, to give a higher molecular weight polycarbonate having molar masses Mw ≥ 18 000 g/mol; wherein the one or more catalysts are selected from phosphonium and ammonium compounds.

The polycarbonates obtained by the process according to the invention have a weight average molecular weight Mw of ≥ 18 000 g/mol and an OH terminal group content ≤ 100 mg/kg have and contents of Fries branching species of at least 5 mg/kg and ≤ 1000 mg/kg. These have reduced subsequent yellowing of less than 5, preferably less than 3, units of the Yellowness Index on heat ageing in air at 135°C over a period of 1000 hours.

For carrying out the process according to the invention, for example, a plant design as described in WO 02/077067 A can be used. The polycarbonate synthesis is carried out by transesterification of diaryl carbonates with dihydroxyaryl compounds in the presence of quaternary onium compounds, an oligocarbonate being prepared in a plurality of evaporator stages with temperatures increasing stepwise and pressures decreasing stepwise and being subjected to condensation in one or two high-viscosity reactors connected in series, at further increasing temperatures and decreasing pressures to give the polycarbonate.

The bisphenol used may contain monomeric phenols, preferably phenol, as a secondary component. The polycarbonate can also be prepared by condensation of carbonate oligomers, which contain hydroxyl and/or carbonate terminal groups, and suitable diaryl carbonates and bisphenols.

Preferred carbonate oligomers are described by the formula (I), with a weight average molecular weight Mw of up to 10 000 [g/mol]. 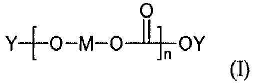 in which Y is H or an unsubstituted or substituted aryl radical.

Suitable diaryl carbonates in the context of the invention are di-C₆- to di-C₁₄-aryl esters, preferably the diesters of phenol or of alkyl- or aryl-substituted phenols, i.e. diphenyl carbonate, dicresyl carbonate and di-4-tert-butylphenyl carbonate. Diphenyl carbonate is most preferred.

The suitable di-C₆- to di-C₁₄-aryl esters also include asymmetric diaryl esters which contain two different aryl substituents. Phenyl cresyl carbonate and 4-tert-butylphenyl phenyl carbonate are preferred.

The suitable diaryl esters also include mixtures of more than one di-C₆-C₁₄-aryl ester. Preferred mixtures are mixtures of diphenyl carbonate, dicresyl carbonate and di-4-tert-butylphenyl carbonate.

Based on 1 mol of diphenol, the diaryl carbonates may be used in amounts of 1.00 to 1.30 mol, particularly preferably in amounts of 1.02 to 1.20 mol and most preferably in amounts of 1.05 to 1.15 mol.

Suitable dihydroxyaryl compounds in the context of the invention are those which correspond to the formula (II): 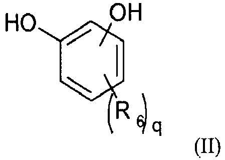 in which
R₆ is a substituted or unsubstituted phenyl, methyl, propyl, ethyl, butyl, Cl or Br and q represents 0, 1 or 2.

Preferred dihydroxybenzene compounds are 1,3-dihydroxybenzene, 1,4-dihydroxybenzene and 1,2-dihydroxybenzene.

Suitable dihydroxydiaryl compounds in the context of the invention are those which correspond to the formula (III): 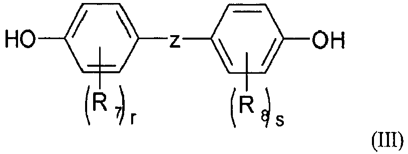 in which
Z is C₁- to C₈-alkylidene or C₅- to C₁₂-cycloalkylidene, S, SO₂ or a single bond,
R₇, R₈, independently of one another, are a substituted or unsubstituted phenyl, methyl, propyl, ethyl, butyl, Cl or Br and
r, s, independently of one another, represent 0, 1 or 2.

Preferred diphenols are 4,4'-dihydroxybiphenyl, 4,4'-dihydroxybiphenyl sulphide, 1,1-bis(4-hydroxphenyl)cyclohexane, 1,2-bis(4-hydroxyphenyl)benzene, 1,3-bis(4-hydroxyphenyl)benzene, 1,4-bis(4-hydroxyphenyl)benzene, bis(4-hydroxyphenyl)methane, 2,2-bis(4-hydroxyphenyl)-propane, 2,4-bis(4-hydroxyphenyl)-2-methylbutane, 2,2-bis(3-methyl-4-hydroxyphenyl)propane, 2,2-bis(3-chloro-4-hydroxyphenyl)propane, bis(3,5-dimethyl-4-hydroxyphenyl)methane, 2,2-bis(3,5-dimethyl-4-hydroxyphenyl)propane, bis(3,5-dimethyl-4-hydroxyphenyl)sulphone, bis(4-hydroxyphenyl) sulphone, 1,2-bis[2-(4-hydroxyphenyl)isopropyl]benzene, 1,3-bis[2-(4-hydroxy-phenyl)isopropyl]benzene, 1,4-bis[2-(4-hydroxyphenyl)isopropyl]benzene, 1,1-bis(4-hydroxy-phenyl)-1-phenylethane, 2,4-bis(4-hydroxyphenyl)-2-methylbutane, 2,2-bis(3,5-dichloro-4-hydroxyphenyl)propane, 2,2-bis(3,5-dibromo-4-hydroxyphenyl)propane, 1,1-bis(4-hydroxy-phenyl)-3,3,5-trimethylcyclohexane.

The most preferred diphenols are 1,1-bis(4-hydroxyphenyl)-1-phenylethane, 2,2-bis(4-hydroxy-phenyl)propane, 4,4'-dihydroxybiphenyl, 1,1-bis(4-hydroxyphenyl)-3,3,5-trimethylcyclohexane, 2,2-bis(3,5-dibromo-4-hydroxyphenyl)propane and 1,3-bis[2-(4-hydroxyphenyl)isopropyl]benzene.

The suitable diphenols also include mixtures of more than one diphenol; a copolycarbonate to form thereby. The most preferred mixing components are 1,3-bis[2-(4-hydroxyphenyl)isopropyl]benzene, 1,1-bis(4-hydroxyphenyl)-3,3,5-trimethylcyclohexane, 2,2-bis(4-hydroxyphenyl)propane, 4,4'-dihydroxybiphenyl and 2,2-bis(3,5-dibromo-4-hydroxyphenyl)-propane.

In addition, a branching agent can be added, such as, for example, compounds which contain three functional phenolic OH groups. The branching would increase the non-Newtonian flow behaviour. The suitable branching agents include phloroglucinol, 3,3-bis(3-methyl-4-hydroxyphenyl)-2-oxo-2,3-dihydroindole, 4,6-dimethyl-2,4,6-tris(4-hydroxyphenyl)hep-2-ene, 4,6-dimethyl-2,4,6-tris(4-hydroxyphenyl)heptane, 1,3,5-tris(4-hydroxyphenyl)benzene, 1,1,1-tris(4-hydroxyphenyl)ethane, tris(4-hydroxyphenyl)phenylmethane, 2,2-bis[4,4-bis(4-hydroxyphenyl)cyclohexyl]propane, 2,4-bis(4-hydroxyphenylisopropyl)phenol, 2,6-bis(2-hydroxy-5'-methylbenzyl)-4-methylphenol, 2-(4-hydroxyphenyl)-2-(2,4-dihydroxyphenyl)propane, hexakis (4-(4-hydroxyphenylisopropyl)-phenyl)orthoterephthalate, tetrakis(4-hydroxyphenyl)methane, tetrakis(4-(4-hydroxyphenylisopropyl)phenoxy)methane, 1,4-bis((4',4"-dihydroxytriphenyl)methyl)benzene and isatinbiscresol, pentaerythritol, 2,4-dihydroxybenzoic acid, trimesic acid, cyanuric acid.

Catalysts suitable for the preparation of polycarbonates according to the invention are, for example, those from the general formula (IV) 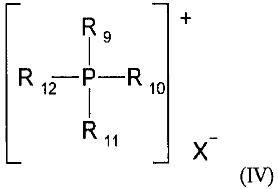 in which
R₉, R₁₀, R₁₁ and R₁₂, independently of one another, may designate the same or different C₁- to C₁₈-alkylenes, C₆- to C₁₀-aryls or C₅- to C₆-cycloalkyls and X⁻ may represent an anion in which the corresponding acid-based pair H⁺ + X⁻ → HX has a pK_{b} of ≤ 11.

Preferred catalysts are tetraphenylphosphonium fluoride, tetraphenylphosphonium tetraphenylborate and tetraphenylphosphonium phenolate. Tetraphenylphosphonium phenolate is most preferred. Preferred amounts of phosphonium salt catalysts are, for example, 10⁻² to 10⁻⁸ mol per mole of diphenol and the most preferred amounts of catalyst are 10⁻⁴ to 10⁻⁶ mol per mole of diphenol. Optionally, cocatalysts can be used in addition to the phosphonium salt(s) in order to increase the rate of the polymerization.

Such cocatalysts may be, for example, salts of alkali metals and alkaline earth metals, such as hydroxides, alkoxides and aryl oxides of lithium, sodium and potassium, preferably hydroxide, alkoxide or aryl oxide salts of sodium. Sodium hydroxide and sodium phenolate are most preferred. The amounts of the cocatalyst may be, for example, in the range from 1 to 200 µg/kg, preferably 5 to 150 µg/kg and most preferably 10 to 125 µg/kg, based in each case on the mass of the dihydroxydiaryl compound used, in each case calculated as sodium.

Preferably, no cocatalyst is used.

The temperatures over the entire process are in general between 160 and 330°C, and the pressures are between 15 bar absolute and 0.01 mbar absolute.

A continuous procedure is chosen because it is advantageous for the product quality.

The continuous process according to the invention is preferably carried out in such a manner that one or more dihydroxyaryl compounds are subjected to precondensation with diphenyl carbonate with the use of at least one catalyst and the molecular weight of the end product is increased to the desired level after this precondensation, with separating off the phenol formed, in a plurality of subsequent reaction evaporator stages, with temperatures increasing stepwise and pressures decreasing stepwise.

The devices, apparatuses and reactors suitable for the individual reaction evaporator stages are, depending on the course of the process, heat exchangers, flash apparatuses, separators, columns, evaporators, stirred containers and reactors and other commercially available apparatuses which provide the necessary residence time at selected temperatures and pressures. The chosen devices must permit the necessary heat input and must be designed so that they are suitable for the continuously increasing melt viscosity.

All devices are connected to one another via pumps, pipelines and valves. The pipelines between all facilities should of course be as short as possible and the number of bends in the pipes should be kept as small as possible in order to avoid unnecessarily prolonged residence times.

For carrying out the process by the continuous procedure according to the invention, either the reactants can be melted together or the solid dihydroxyaryl compound(s) can be dissolved in the diphenyl carbonate melt or the solid diphenyl carbonate or carbonates can be dissolved in the melt of the dihydroxyaryl compound(s) or the two raw materials are combined as a melt, preferably directly from the preparation. The residence times of the separate melts of the raw materials, in particular those of the melt of the dihydroxyaryl compound, are adjusted so as to be as short as possible. On the other hand, owing to the reduced melting point of the raw material mixture in comparison with the individual raw materials, the melt mixture may dwell for a long lifetime at correspondingly lower temperatures without reductions in quality.

Thereafter, the catalyst(s), preferably dissolved in a suitable solvent, such as, for example, phenol, is (are) admixed and the melt is heated to the reaction temperature.

The particularly preferred embodiment of the process according to the invention, in which, for example, 2,2-bis(4-hydroxyphenyl)propane (bisphenol A, BPA) and diphenyl carbonate (DPC) are reacted with one another to give a polycarbonate, may be described below by way of example but not so as to impose a limitation: the reaction temperature at the beginning of this particularly preferred embodiment is 180 to 220°C, preferably 190 to 210°C, very particularly preferably 190°C. In the case of residence times of 15 to 100 min, preferably 30 to 90 min, the reaction equilibrium is adjusted without removing the hydroxyaryl compound formed. The reaction can be carried out at atmospheric pressure but, for technical reasons, also at superatmospheric pressure. The preferred pressure in industrial plants is 2 to 15 bar absolute.

A small amount of ≤ 30% by weight of phenol can be added to the bisphenol A.

The melt mixture is depressurized in a first vacuum chamber whose pressure is adjusted to 100 to 400 mbar, preferably to 150 to 300 mbar, and directly thereafter heated in a suitable device at the same pressure back to the entry temperature. In the depressurization process, the resulting hydroxyaryl compound with monomers still present is vapourized. The bottom temperature is about 190°C and the top temperature of the vacuum chamber about 170°C. After a residence time of 5 to 70 min in a bottom receiver, optionally with pump circulation at the same pressure and same temperature, the reaction mixture is depressurized in a second vacuum chamber whose pressure is 50 to 200 mbar, preferably 70 to 150 mbar, and directly thereafter heated in a suitable device at the same pressure to a temperature of 190 to 250°C, preferably 210 to 240°C.

Here too, the resulting hydroxyaryl compound with monomers still present is vapourized. After a residence time of 5 to 85 minutes in a bottom receiver, optionally with pump circulation, at the same pressure and same temperature, the reaction mixture is depressurized in a third vacuum chamber whose pressure is 30 to 150 mbar, preferably 40 to 120 mbar, and directly thereafter heated in a suitable device at the same pressure to a temperature of 220 to 290°C, preferably 230 to 280°C.

Here too, the resulting hydroxyaryl compound with monomers still present was vapourized. After a residence time of 5 to 100 minutes in a bottom receiver, optionally with pump circulation at the same pressure and same temperature, the reaction mixture is depressurized in a further vacuum chamber whose pressure is at 5 to 100 mbar, preferably 15 to 100 mbar, particularly preferably 20 to 80 mbar, and directly thereafter heated in a suitable device at the same pressure to a temperature of 250 to 300°C, preferably 260 to 290°C, particularly preferably to 260 to 280°C. Here too, the resulting hydroxyaryl compound with monomers still present is vapourized.

The number of these stages, in this case 4 by way of example, may vary between 2 and 6. The temperatures and pressures should be correspondingly adapted on changing the number of stages, in order to obtain comparable results. The relative viscosity of the oligomeric carbonate which is achieved behind the last stage is between 1.04 and 1.20, preferably between 1.05 and 1.15, particularly preferably between 1.06 and 1.12.

For the preparation of the polycarbonate according to the invention, the oligocarbonate thus produced is transported, after a residence time of 5 to 100 min in a bottom receiver, optionally with pump circulation at the same pressure and same temperature as in the last flash/evaporator stage, into a high-viscosity reactor which is configured, for example, as a disc or discage reactor and is subjected to further condensation at 250 to 310°C, preferably 250 to 290°C, particularly preferably 250 to 280°C, at pressures of 1 to 15 mbar, preferably 2 to 10 mbar, during residence times of 150 to 350 min, preferably 200 to 300 min. The product achieves a relative viscosity of 1.12 to 1.28, preferably 1.13 to 1.26, particularly preferably 1.13 to 1.24.

The melt leaving this reactor is brought to the desired final viscosity or the final molecular weight in a further disc or discage reactor. The temperatures are 270 to 330°C, preferably 280 to 320°C, particularly preferably 280 to 310°C, the pressure is 0.01 to 3 mbar, preferably 0.2 to 2 mbar, with residence times of 150 to 300 minutes, preferably 200 to 270 minutes. The relative viscosities are adjusted to the level required for the intended use and are 1.18 to 1.40, preferably 1.18 to 1.37, particularly preferably 1.18 to 1.35.

The polycarbonate thus obtained contains less than or equal to 100 mg/kg, of OH terminal groups, based on all polycarbonate terminal groups, and has contents of Fries branching species of greater than or equal to 5 mg/kg and ≤ 1000 mg/kg.

The function of the two high-viscosity reactors can also be combined in a single high-viscosity reactor.

The vapours from all process stages are discharged immediately, collected and worked up. This working-up is effected as a rule by distillation in order to achieve high purities of the recovered substances. This can be effected, for example, according to DE-A 10 100 404. Recovery and isolation of the eliminated phenol in ultrapure form is self-evident from the economic and ecological point of view. The phenol can be used directly for the preparation of a dihydroxyaryl compound or of a diaryl carbonate.

The disc or discage reactors are distinguished in that they provide a very large, continuously renewed surface area in vacuo with long residence times. The geometrical form of the disc or discage reactors will be adapted to the melt viscosities of the products.

For example, reactors as described in DE 44 47 422 C2 and EP-A 1 253 163 or twin-screw reactors as described in WO-A 99/28 370 are suitable.

The above-described particularly preferred embodiment of the process according to the invention can also be applied to the reaction of dihydroxyaryl compounds other than 2,2-bis(4-hydroxyphenyl)propane (bisphenol A, BPA). Adaptations of the temperature and pressure settings in the individual process stages may be required.

The oligocarbonates, including very low molecular weight ones, and the prepared polycarbonates are transported as a rule by means of gear pumps, screws of very different design or displacement pumps of a specific design.

Particularly suitable materials for the production of the apparatuses, reactors, pipelines, pumps and fittings are stainless steel of the type Cr Ni (Mo) 18/10, such as, for example, 1.4571 or 1.4541 (Stahlschlussel 2001, publisher: Stahlschlussel Wegst GmbH, Th-Heuss-Strasse 36, D-71672 Marbach) and Ni-based alloys of the type C, such as, for example, 2.4605 or 2.4610 (Stahlschlüssel 2001, publisher: Stahlschlüssel Wegst GmbH, Th-Heuss-Strasse 36, D-71672 Marbach). The stainless steels are used up to process temperatures of about 290°C and the Ni-based alloys at process temperatures above about 290°C.

The substantial process parameters, such as ratio of diphenylcarbonate to dihydroxyaryl compound at the beginning of the process, pressure, temperature and residence time, should be chosen in the total plant before the end or finish reactor so that, before entry of the reaction melt into the end or finish reactor, a molecular weight sufficient for the intended use of the product to be prepared and certain OH terminal group contents are achieved.

The final molecular weight is substantially dependent on the chosen exit temperature of the reactor, the pressure and the OH terminal group concentration. These conditions should therefore be chosen in the penultimate reactor in order to be able to prepare the desired end product.

The melt polycarbonates obtained by the process according to the invention are characterized by the general formula (I) 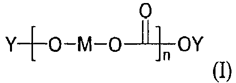 in which the square bracket designates repeating structural units, M represents Ar or a polyfunctional compound A, B, C and compound D, it being possible for Ar to be a compound which is represented by formula (V) or (VI), preferably (VI) 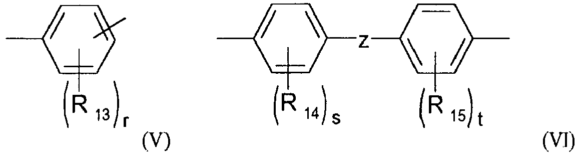 in which
Z is C₁- to C₈-alkylidene or C₅- to C₁₂-cycloalkylidene, S, SO₂ or a single bond,
R₁₃, R₁₄, R₁₅, independently of one another, are a substituted or unsubstituted C₁-C₁₈-alkyl radical, preferably a substituted or unsubstituted phenyl, methyl, propyl, ethyl, butyl, Cl or Br, and
r, s, t, independently of one another, represent 0, 1 or 2,
the polyfunctional compound A being a compound of the formula 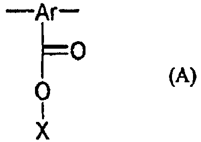 the polyfunctional compound B being a compound of the formula 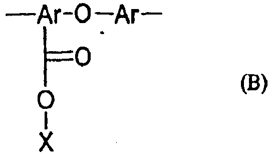 the polyfunctional compound C being a compound of the formula 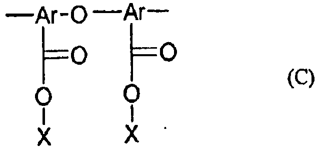 compound D being a compound of the formula 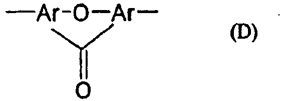 and the sum of polyfunctional compounds A, B, C and D being ≥ 5 mg/kg and ≤ 1000 mg/kg,
Y being H or a compound of the formula (X) 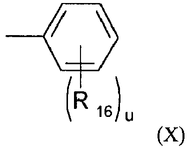 in which
   R₁₆ is identical or different H, C₁- to C₂₀-alkyl, C₆H₅ or C(CH₃)₂C₆H₅, and
   u may be 0, 1, 2 or 3,
   X being Y or -[MOCOO]ₙ-Y, M and Y having the abovementioned meaning.

The polycarbonate obtained by the process according to the invention may have an average molecular weight Mw, determined by gel permeation chromatography, of 18 000 to 80 000, preferably of 18 000 to 60 000 and most preferably 18 000 to 40 000.

Preferably, Ar has the following meaning:

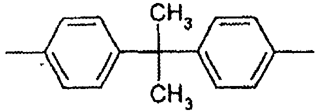

Preferably, the polyfunctional compound A is the compound A1:

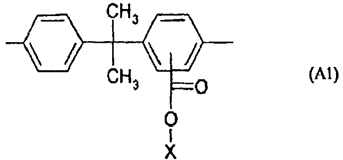

Preferably, the compound B is the compound B1:

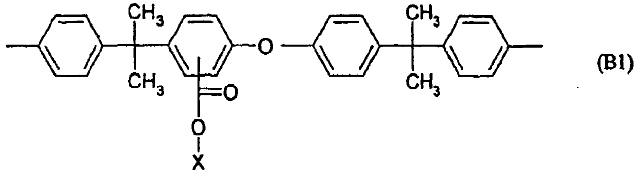

Preferably, the polyfunctional compound C is the compound C1:

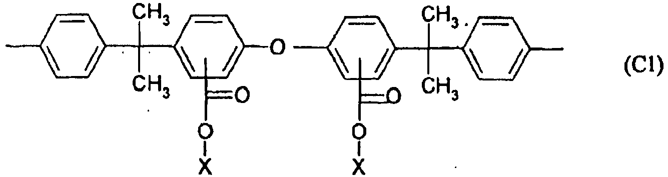

In the compounds A1, B1 and C1, X has the abovementioned meaning. Preferably, the compound D is the compound D1:

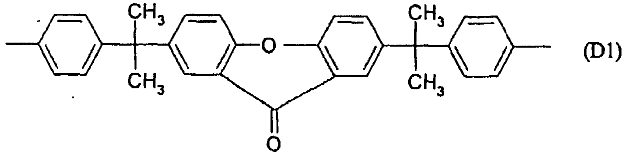

The proportions of the components A1 to D1 are present in total in amounts of ≥ 5 mg/kg and ≤ 1000 mg/kg in the melt polycarbonate.

The sum of the components A, B, C and D in the context of the invention are designated as Fries branching species, even if compound D or D1 is bifunctional and hence not a branching species in the true sense.

The polycarbonates obtained by the process according to the invention can be used alone or as a mixture with the customary polymer additives, organic and further inorganic fillers and reinforcing materials and/or other polymers mixed and for the production of mouldings. Examples of customary additives are: demoulding agents, stabilizers, antioxidants, flame retardants, dyes, pigments, antistatic agents, nucleating agents, antidrip agents, UV absorbers, metal deactivators, peroxide scavengers, costabilizers, plasticizers and impact modifiers. These additives are optionally added in customary amounts known from the literature, preferably used in amounts of 10 ppm - 40% by weight and particularly preferably of 50 ppm to 15% by weight, based on the total composition.

Examples of possible polymeric constituents are: styrene/acrylonitrile terpolymers (SAN), acrylonitrile/butadiene/styrene terpolymers (ABS), polymethyl methacrylate (PMMA), fluorinated polyolefins (PTFE), polyphenylene sulphide (PPS), polyolefins, such as polyethylene, polypropylene and ethylene/propylene rubbers, epoxy resins, polyesters, such as polybutylene terephthalate (PBT), polyethylene terephthalate (PET), polycyclohexenedimethanol (PCT), copolyesters of ethylene glycol and cyclohexenedimethanolterephthalic acid in the ratio of 1:4 of the two constituents (PCTG), copolyesters of ethylene glycol and cyclohexenedimethanolterephthalic acid in the ratio of 4:1 of the two constituents (PETG) and other polycarbonates produced by the phase boundary process and mixtures having the abovementioned components.

The polycarbonate obtained by the process according to the invention may be used in an amount of, preferably, 5 to 95% by weight, particularly preferably 10 to 90% by weight and most preferably 20 to 80% by weight, based on the mass of the composition. The further polymeric constituents may be present in an amount of, preferably, 1 to 60% by weight, particularly preferably 1 to 40% by weight and most preferably 2 to 30% by weight, based on the mass of the composition.

The compositions may contain up to 60, preferably 10 to 40, % by weight, based on the filled or reinforced moulding material, of inorganic materials, such as fillers and/or reinforcing materials. Flame retardants may be present in the composition in an amount of up to 35% by weight, preferably 10 to 25% by weight, based on the mass of the composition.

### Examples

### Relative solution viscosity (eta rel.)

The relative solution viscosity was determined in dichloromethane at a concentration of 5 g/l at 25°C using an Ubbelohde capillary viscometer.

### Mw (weight average molar mass)

The determination of Mw was effected by means of gel permeation chromatography (GPC) and UV-detection at a wavelength of 254 nm. For this purpose, 0.2% PC solutions in dichloromethane were used. The calibration of the GPC was effected using linear PC standards having known molar mass distributions.

### Phenolic OH terminal groups

The content of phenolic OH terminal groups was determined by the titanium (IV) chloride method (A. Horbach, U. Veiel and H. Wunderlich, "Endgruppenbestimmung an aromatischen Polycarbonaten [Terminal group determination on aromatic polycarbonates]", Die Makromolekulare Chemie, 88, 215-231, 1965).

The phenolic OH terminal groups are stated in mg (OH) per kg of polycarbonate.

### YI

The determination of the optical properties of the moulding materials according to the invention is effected by measuring the so-called Yellowness Index (YI) on standard test specimens (60 x 40 x 4 mm) according to ASTM E313. The standard test specimens were produced at a melt temperature of 300°C and a mould temperature of 90°C.

### Compounds A1, B1, C1 and D1

The determination of the concentration of the compounds A1, B1, C1 and D1 is effected by alkaline hydrolysis of the polycarbonate and subsequent analysis of the hydrolysis product by HPLC. The compounds are characterized by nuclear magnetic resonance spectroscopy.

### Thermal storage

For thermal storage, standard polycarbonate test specimens (60 x 40 x 4 mm) are stored in an air circulating oven for 1000 hours at 135°C. The YI is then measured according to ASTM E313. The difference relative to the zero sample (prior to storage) is calcuated (=ΔYI (1000 h)).

The reaction conditions for the preparation of Examples 1-3 are summarized in Table 1.

### Example 1

7020 kg/h of melt mixture consisting of 3440 kg of DPC/h (16058 mol/h) and 3580 kg of a BPA/phenol mixture/h, with addition of 2.3 kg/h of catalyst solution, were pumped from a storage vessel through a heat exchanger, heated to 190°C and passed through a hold-up column. The average residence time was 45 min. The catalyst mixture consisted of 0.52 kg of the phenol adduct oftetraphenylphosphonium phenolate (TPPP) with phenol (contain 65.5% by weight of tetraphenylphosphonium phenolate 0.786 mol) dissolved in 4.5 kg of phenol. The BPA/phenol mixture consisted of 91.8% by weight of BPA (14396 mol) and 8.2% by weight of phenol (3119 mol). The DPC/BPA ratio is 1:115 (mol/mol).

The melt was then passed via an expansion valve into a separator under 225 mbar. The outflowing melt was heated again to 190°C in a falling-film evaporator (flash) likewise under 225 mbar and was collected in a receiver. After an average residence time of 60 min, the melt was pumped into the next three identically designed stages. Conditions of the 2nd/3rd/4th stage are 88/66/39 mbar; 230/255/273°C and 75/80/80 minutes.

The oligomer formed was subjected to further condensation in a downstream discage reactor (reactor 1) at a pressure of 7 mbar and a temperature of 271 °C and an average residence time of 255 min. Thereafter, the melt was subjected to further condensation in a second discage reactor (reactor 2) at 280°C and a pressure of 1.1 mbar and an average residence time of 255 min, discharged from the reactor and granulated.

### Comparative Example 2

15927 kg/h of melt mixture consisting of 7798 kg of DPC/h (36402 mol/h) and 8128 kg of a BPA/phenol mixture/h, with addition of 6.35 kg/h of catalyst solution, were pumped from a storage vessel through a heat exchanger, heated to 190°C and passed through a hold-up column. The average residence time was 45 min. The catalyst mixture consisted of 0.52 kg of the phenol adduct oftetraphenylphosphonium phenolate with phenol (contain 65.5% by weight of tetraphenylphosphonium phenolate 0.786 mol) dissolved in 4.5 kg of phenol. The BPA/phenol mixture consisted of 92.66% by weight of BPA (32990 mol) and 7.34% by weight of phenol (6339 mol). The DPC/BPA ratio is 1:103 (mol/mol).

The melt was then passed via an expansion valve into a separator under 236 mbar. The outflowing melt was heated again to 190°C in a falling-film evaporator likewise under 236 mbar and was collected in a receiver. After an average residence time of 30 min, the melt was pumped into the next two identically designed stages. Conditions of the 2nd/3rd stage are 95/50 mbar; 227/273°C and 35/40 minutes.

The oligomer formed was subjected to further condensation in a downstream discage reactor (reactor 1) at a pressure of 7 mbar and a temperature of 274°C and an average residence time of 120 min. Thereafter, the melt was subjected to further condensation in a second discage reactor (reactor 2) at 290°C and a pressure of 0.8 mbar and an average residence time of 120 min, discharged from the reactor and granulated.

### Comparative Example 3

12450 kg/h of melt mixture consisting of 6390 kg of DPC/h (29829 mol/h) and 6060 kg of BPA/h (26545 mol/h), with addition of 5.1 kg/h of catalyst solution, were pumped from a storage vessel through a heat exchanger, heated to 190°C and passed through a hold-up column. The average residence time was 45 min. The catalyst mixture consisted of 0.52 kg of the phenol adduct of tetraphenylphosphonium phenolate with phenol (contain 65.5% by weight of tetraphenylphosphonium phenolate 0.786 mol) dissolved in 4.5 kg of phenol. The DPC/BPA ratio is 1:124 (mol/mol).

The melt was then passed via an expansion valve into a separator under 185 mbar. The outflowing melt was heated again to 190°C in a falling-film evaporator (flash) likewise under 185 mbar and was collected in a receiver. After an average residence time of 20 min, the melt was pumped into the next three identically designed stages. Conditions of the 2nd/3rd/4th stage are 95/70/40 mbar, 224/240/264°C and 20/10/10 minutes.

The oligomer formed was subjected to further condensation in a downstream discage reactor (reactor 1) at a pressure of 4.3 mbar and a temperature of 280°C and an average residence time of 40 min. Thereafter, the melt was subjected to further condensation in a second discage reactor (reactor 2) at 301 °C and a pressure of 1.6 mbar and an average residence time of 60 min, discharged from the reactor and granulated.

The examples are characterized with respect to their properties in Table 2. The comparison of Example 1 with the other examples demonstrates the outstanding properties of Example 1 according to the invention in the case of the subsequent yellowing (ΔYI (1000 h)) in comparison with the other MPC comparative examples.

**Table 1: Overview of the preparation conditions of Examples 1 - 3:**

| Example | | | 1* | 2 | 3 |
|---|---|---|---|---|---|
| BPA | [kg/h] | | 3286 | 7531 | 6060 |
| DPC | [kg/h] | | 3440 | 7798 | 6390 |
| Phenol | [kg/h] | | 294 | 597 | -- |
| 6.8% of TPPP in phenol | [kg/h] | | 2.3 | 6.4 | 5.1 |
| | | | | | |
| Flash 1 | p [mbar] | | 225 | 236 | 185 |
| | T [°C] | | 190 | 187 | 190 |
| | t [min] | | 60 | 30 | 20 |
| Flash2 | p [mbar] | | 88 | 95 | 95 |
| | T [°C] | | 230 | 227 | 224 |
| | t [min] | | 75 | 35 | 20 |
| Flash3 | p [mbar] | | 66 | 50 | 70 |
| | T [°C] | | 255 | 273 | 240 |
| | t [min] | | 80 | 40 | 10 |
| Flash4 | p [mbar] | | 39 | -- | 40 |
| | T [°C] | | 273 | -- | 264 |
| | t [min] | | 80 | -- | 10 |
| Reactor 1 | p [mbar] | | 7 | 7 | 4.3 |
| | T [°C] | | 271 | 274 | 280 |
| | t [min] | | 255 | 120 | 40 |
| Reactor 2 | p [mbar] | | 1.1 | 0.8 | 1.6 |
| | T [°C] | | 280 | 290 | 301 |
| | t [min] | | 255 | 120 | 60 |
| TPPP: Tetraphenylphosphonium phenolate about 6.8% dissolved in phenol. | | | | | |
| *according to the invention | | | | | |

**Table 2: Characterization of the examples**

| | Example 1 according to the invention | Example 2 (comparison) | Example 3 (comparison) |
|---|---|---|---|
| Phenol. OH [mg/kg] | 90 | 303 | 430 |
| Eta rel. | 1.289 | 1.286 | 1.287 |
| Mw [g/mol] | 27367 | 26653 | 27184 |
| YI | 2.23 | 1.67 | 2.06 |
| ΔYI (1000 h) | 2.45 | 5.77 | 9.49 |
| A1 | 355 | 370 | 649 |
| B1 | 51 | 35 | 62 |
| C1 | 24 | 11 | 35 |
| D1 | 100 | 67 | 229 |

## Claims

1. Continuous melt transesterification process for the preparation of polycarbonates having a weight average molecular weight Mw of ≥ 18 000 g/mol, an OH terminal group content of ≤ 100 mg/kg, and containing structural units of the formula (I) 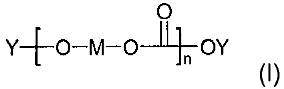
in which the square bracket designates repeating structural units,
M is Ar or a polyfunctional compound A, B, C and compound D,
it being possible for Ar to be a compound which is represented by formula (V) or (VI) 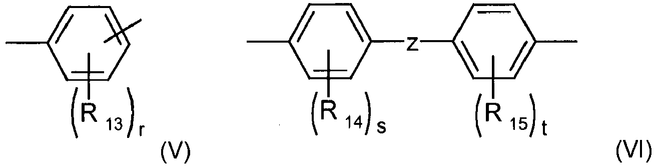 in which
Z is C₁- to C₈-alkylidene or C₅- to C₁₂-cycloalkylidene, S, SO₂ or a single bond,
R₁₃, R₁₄, R₁₅, independently of one another, are a substituted or unsubstituted C1 to C18 alkyl radical, preferably a substituted or unsubstituted phenyl, methyl, propyl, ethyl, butyl, Cl or Br,
n represents 0, 1 or 2,
r, s, t, independently of one another, may be 0, 1, 2 or 3,
the polyfunctional compound A being a compound of the formula 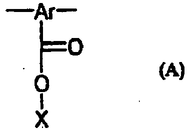
the polyfunctional compound B being a compound of the formula 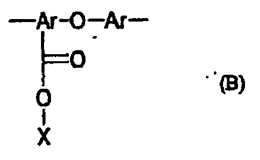
the polyfunctional compound C being a compound of the formula 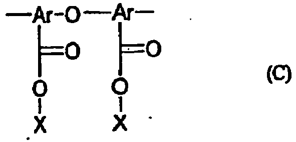
compound D being a compound of the formula 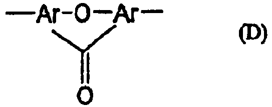
Y being H or a compound of the formula (X) 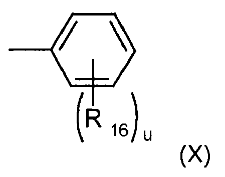 in which
R₁₆ is identical or different H, C₁- to C₂₀-alkyl, C₆H₅ or C(CH₃)₂C₆H₅, and
u may be 0, 1, 2 or 3,
X being Y or -[MOCOO]ₙ-Y, M and Y having the abovementioned meaning;
and the sum of polyfunctional compounds A, B, C and D being ≥ 5 mg/kg and ≤ 1000 mg/kg, **characterized in that**:
a) aromatic diphenols and diphenyl carbonate are reacted in the presence of one or more catalysts, in a first process step at temperatures between 160°C and 280°C and at pressures between 250 mbar and 30 mbar in an optionally multistage process with elimination of phenol to give oligomeric aromatic carbonates having molar masses Mw of less than 10 000 g/mol, and **in that**
b) in a second process step, the oligomeric aromatic carbonates prepared in a) are reacted at temperatures between 260°C and 310°C and at pressures between 10 mbar and 0.5 mbar in an optionally multistage process with elimination of phenol during a residence time in this second process step of altogether at least 500 minutes, to give a higher molecular weight polycarbonate having molar masses Mw of greater than 18 000 g/mol
wherein the one or more catalysts are selected from phosphonium and ammonium compounds.

2. Process for the preparation of polycarbonate according to Claim 1, in which the aromatic diphenol employed is used as a mixture with a monophenol.

3. Process according to Claim 2, the content of the monophenol in the mixture with the aromatic diphenol being up to 30% by weight.

## Patentansprüche

1. Kontinuierliches Schmelzeumesterungsverfahren zur Herstellung von Polycarbonaten mit einem Molekulargewichtsmittel Mw ≥ 18.000 g/mol, einem OH-Endgruppengehalt von ≤ 100 mg/kg und enthaltend Struktureinheiten der Formel (I) 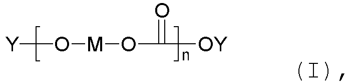 wobei die eckige Klammer sich wiederholende Struktureinheiten bezeichnet,
M gleich Ar oder eine multifunktionelle Verbindung A, B, C sowie Verbindung D ist,
wobei Ar eine Verbindung sein kann, die durch Formel (V) oder (VI) dargestellt wird, 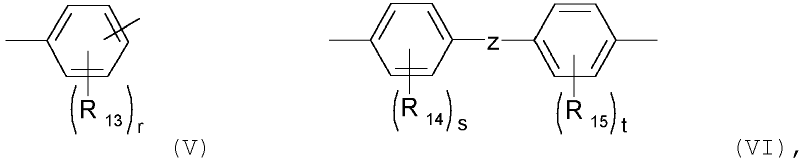 wobei
C₁- bis C₈-Alkyliden oder C₅- bis C₁₂-Cycloalkyliden, S, SO₂ oder eine Einfachbindung ist,
R₁₃, R₁₄, R₁₅ unabhängig voneinander ein substituierter oder unsubstituierter C1- bis C18-Alkylrest sind, bevorzugt ein substituiertes oder unsubstituiertes Phenyl, Methyl, Propyl, Ethyl, Butyl, Cl oder Br sind,
n für 0, 1 oder 2 steht,
r, s, t unabhängig voneinander 0, 1, 2 oder 3 sein können,
wobei die multifunktionelle Verbindung A eine Verbindung der Formel 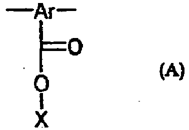
ist, wobei die multifunktionelle Verbindung B eine Verbindung der Formel 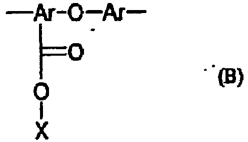
ist, wobei die multifunktionelle Verbindung C eine Verbindung der Formel 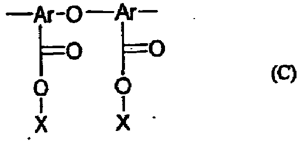
ist, wobei Verbindung D eine Verbindung der Formel 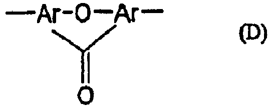
ist,
wobei Y H oder eine Verbindung der Formel (X) 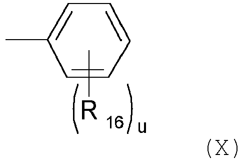
ist, wobei
R₁₆ gleich oder verschieden H, C₁- bis C₂₀-Alkyl, C₆H₅ oder C(CH₃)₂C₆H₅ ist, und
u 0, 1, 2 oder 3 sein kann,
wobei X Y oder -[MOCOO]ₙ-Y ist, wobei M und Y die oben angegebene Bedeutung haben;
und die Summe von multifunktionellen Verbindungen A, B, C und D ≥ 5 mg/kg und ≤ 1000 mg/kg ist,
**dadurch gekennzeichnet, dass**:
a) aromatische Diphenole und Diphenylcarbonat in Gegenwart eines oder mehrerer Katalysatoren in einem ersten Verfahrensschritt bei Temperaturen zwischen 160°C und 280°C, und bei Drücken zwischen 250 mbar und 30 mbar in einem ggf. mehrstufigen Prozess unter Abspaltung von Phenol zu oligomeren aromatischen Carbonaten mit Molmassen Mw kleiner 10.000 g/mol umgesetzt werden, und dass
b) in einem zweiten Verfahrensschritt die in a) hergestellten oligomeren aromatischen Carbonate bei Temperaturen zwischen 260°C und 310°C und bei Drücken zwischen 10 mbar und 0,5 mbar in einem ggf. mehrstufigen Prozess unter Abspaltung von Phenol bei einer Verweilzeit in diesem zweiten Verfahrensschritt von insgesamt mindestens 500 Minuten zu höhermolekularem Polycarbonat mit Molmassen Mw größer 18.000 g/mol umgesetzt werden,
wobei der eine oder die mehreren Katalysatoren aus Phosphonium- und Ammoniumverbindungen ausgewählt werden.

2. Verfahren zur Herstellung von Polycarbonat gemäß Anspruch 1, bei dem das eingesetzte aromatische Diphenol als eine Mischung mit einem Monophenol verwendet wird.

3. Verfahren gemäß Anspruch 2, wobei der Gehalt des Monophenols in der Mischung mit dem aromatischen Diphenol bis zu 30 Gew.-% beträgt.

## Revendications

1. Procédé continu de transestérification à l'état fondu pour la préparation de polycarbonates ayant un poids moléculaire moyen en poids Mw ≥ 18 000 g/mol, une teneur en groupes OH terminaux de moins de 100 mg/kg, et contenant des motifs structuraux de la formule (I) 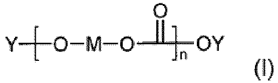
dans laquelle le crochet désigne des motifs structuraux répétitifs,
M représente Ar ou un composé polyfonctionnel A, B, C et un composé D,
Ar pouvant être un composé qui est représenté par la formule (V) ou (VI) 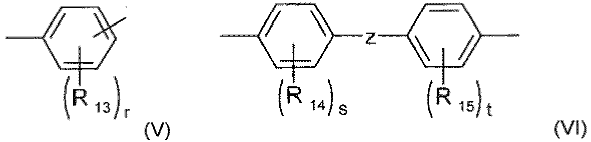
dans lesquelles
Z représente un alkylidène en C₁ à C₈ ou un cycloalkylidène en C₅ à C₁₂, S, SO₂ ou une simple liaison,
R₁₃, R₁₄, R₁₅, indépendamment les uns des autres, représentent un radical alkyle en C₁ à C₁₈ substitué ou non substitué, de préférence un phényle substitué ou non substitué, un méthyle, un propyle, un éthyle, un butyle, Cl ou Br,
n représente 0, 1 ou 2, r, s, t, indépendamment les uns des autres, peuvent valoir 0, 1, 2 ou 3,
le composé polyfonctionnel A étant un composé de la formule 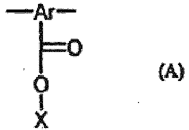
le composé polyfonctionnel B étant un composé de la formule 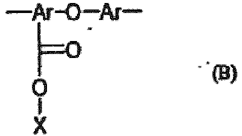
le composé polyfonctionnel C étant un composé de la formule 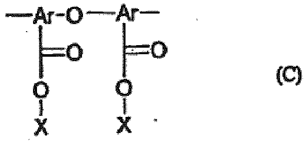
le composé D étant un composé de la formule 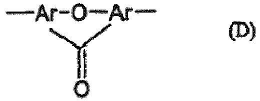
Y représentant H ou un composé de la formule (X) 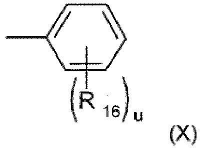
dans laquelle
les R₁₆, identiques ou différents, représentent H, un alkyle en C₁ à C₂₀, C₆H₅ ou C(CH₃)₂C₆H₅, et
u peut valoir 0, 1, 2 ou 3,
X représentant Y ou -[MOCOO]ₙ-Y, M et Y ayant la signification susmentionnée,
et la somme des composés polyfonctionnels A, B, C et D étant ≥ 5 mg/kg et ≤ 1000 mg/kg, **caractérisé en ce que** :
a) on fait réagir des diphénols aromatiques et du carbonate de diphényle en présence d'un ou plusieurs catalyseurs, dans une première étape de procédé à des températures comprises entre 160 °C et 280 °C et à des pressions comprises entre 250 mbar et 30 mbar dans un procédé éventuellement à étapes multiples avec élimination du phénol pour obtenir des carbonates aromatiques oligomères ayant des masses molaires Mw de moins de 10 000 g/mol, et **en ce que**
b) dans une deuxième étape de procédé, on fait réagir les carbonates aromatiques oligomères préparés en a) à des températures comprises entre 260 °C et 310 °C et à des pressions comprises entre 10 mbar et 0,5 mbar dans un procédé éventuellement à étapes multiples avec élimination du phénol pendant un temps de résidence dans cette deuxième étape de procédé d'au moins 500 minutes au total, pour obtenir un polycarbonate à poids moléculaire supérieur ayant des masses molaires Mw ≥ 18 000 g/mol,
dans lequel le ou les catalyseurs sont choisis parmi les composés de phosphonium et d'ammonium.

2. Procédé de préparation de polycarbonate selon la revendication 1, dans lequel le diphénol aromatique employé est utilisé sous la forme d'un mélange avec un monophénol.

3. Procédé selon la revendication 2, la teneur du monophénol dans le mélange avec le diphénol aromatique allant jusqu'à 30 % en poids.
